# EUROPEAN PATENT APPLICATION

(11) **EP 0 814 278 A2**
(43) Date of publication of application: **29.12.1997**
(21) Application number: 97110129.0
(22) Date of filing: 20.06.1997
(51) Int. Cl.: F16F 13/10

(54) **Liquid-contained vibration isolating apparatus and a method of producing an attaching plate thereof**

(30) Priority: 21.06.1996 JP 162178/96
(71) Applicant: TOKAI RUBBER INDUSTRIES, LTD., Komaki-shi Aichi-ken (JP)
(72) Inventor: Matsumoto, Nobuo, c/o Tokai Rubber Industries Ltd., Komaki-shi, Aichi-ken (JP); Kodama, Hirotomo, c/o Tokai Rubber Industries Ltd., Komaki-shi, Aichi-ken (JP); Kato, Takeshi, c/o Tokai Rubber Industries Ltd., Komaki-shi, Aichi-ken (JP)
(74) Representative: Pellmann, Hans-Bernd, Dipl.-Ing.

(57) **Abstract**

A liquid-contained vibration isolating apparatus having an attaching plate which a open pore can be easily formed in and can be produced at low costs. The liquid-contained vibration isolating apparatus comprises a first attaching plate (1); an intermediate cylindrical member (2) having a caulking portion (22) at one end; a second attaching plate (3) shaped in a cylinder with a bottom, fixed by caulking to the caulking portion at one end thereof, and having, at the bottom, a plane attaching seat portion which is to be plane contacted with an attaching surface of the other mating member; a rubber molding (4) provided integrally between the first attaching plate and the other end of the intermediate cylindrical member and forming a tightly-closed action chamber together with the second attaching plate; a diaphragm (5) whose periphery is fixed by caulking to the caulking portion and which divides the action chamber into a liquid chamber (53) and an air chamber (55); and a partition member (6) whose periphery is fixed by caulking to the caulking portion and which divides the liquid chamber into a main liquid chamber and an sub liquid chamber. The second attaching plate is characteristically has a groove (35) which is formed on the outer surface of the attaching seat portion and one end of which is open at the outermost periphery, and a open pore which is provided in the groove and connects the air chamber with the outside.

## Description

### BACKGROUND OF THE INVENTION

### Field of the Invention

This invention relates to a liquid-contained vibration isolating apparatus used for, for example, a suspension system of an automobile, and a method of producing an attaching plate thereof.

### Description of the Related Art

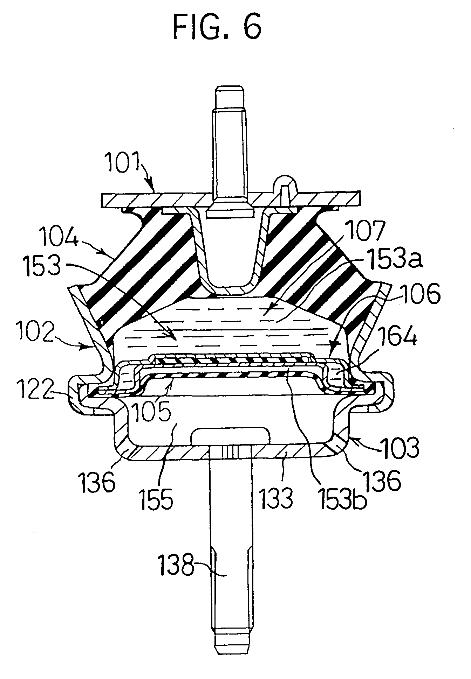

Conventionally, an automotive engine and the like are mounted on a car body by way of a liquid-contained vibration isolating apparatus which has a vibration-proofing function. An apparatus shown in Figure 6 is known as an example of such a liquid-contained vibration isolating apparatus.

This liquid-contained vibration isolating apparatus comprises a first attaching plate 101 to be attached to one mating member; an intermediate cylindrical member 102 having a caulking portion 122 at one end; a second attaching plate 103 formed in the shape of a cylinder having an opening at one end and a bottom at the other end, and having, at the bottom, a plane attaching seat portion 133 which is to be plane contacted with an attaching surface of the other mating member; a rubber molding 104 provided between the first attaching plate 101 and the other end of the intermediate cylindrical member 102 and forming a tightly-closed action chamber together with the second attaching plate 103; a diaphragm 105 fixed liquid-tightly to the inner circumference of the second attaching plate 103 and dividing the action chamber into a liquid chamber 153 in which liquid 107 is contained and an air chamber 155; and a partition member 106 fixed liquid-tightly to the inner circumference of the second attaching plate 103, dividing the liquid chamber 153 into a main liquid chamber 153a on the side of the rubber molding 104 and an sub liquid chamber 153b on the side of the diaphragm 105, and having an orifice passage 164 which connects the liquid chambers 153a, 153b together.

This liquid-contained vibration isolating apparatus is used, for example, by bolting the first attaching plate 101 to an engine bracket and bolting the second attaching plate 103 to a car body. Vibration in a high frequency range from an engine is effectively absorbed by elastic deformation of the rubber molding 104. Such vibration in a low frequency range as engine shakes is effectively absorbed by resonance of the liquid 107 which flows through the orifice passage 164 in accordance with changes in the volume of the main liquid chamber 153a and the sub liquid chamber 153b. The inner pressure of the sub liquid chamber 153b is absorbed by elastic deformation of the diaphragm 105, and accordingly, there arises a difference in pressure between the inner pressure of the sub liquid chamber 153b and that of the main liquid chamber 153a, which makes the liquid 107 flow smoothly through the orifice passage 164.

By the way, the second attaching plate 103 of the above liquid-contained vibration isolating apparatus has open pores 136 which connect the air chamber 155 and the outside in order to secure smooth expansion and contraction of the diaphragm 105. In general, these open pores 136 are formed in oblique directions at corners where the attaching seat portion 133 and a tubular portion of the second attaching plate 103 cross each other. The positions of the open pores 136 are determined with avoiding the attaching seat portion 133 where the open pores 136 might be closed when the second attaching plate 103 is attached to a mating member, and considering that there is little fear that edges of the open pores 136 are contacted with the diaphragm 105 in expansion, in order not to damage durability of the diaphragm 105.

The second attaching plate 103 is produced by transfer pressing sheet metal into an intermediate product in a predetermined shape, and then cutting, deburring, and plating the intermediate product and fitting an attaching bolt 138 into the resulting product. In a case where the open pores 136 are formed by cam dies in a transfer press step, strength of a punch or dies becomes a problem because the open pores 136 are formed in oblique directions at corners where the attaching seat portion 133 and the tubular portion cross each other. Therefore, the open pores 136 are formed separately after the transfer press step is finished, and as a result, the production costs inevitably increase.

### SUMMARY OF THE INVENTION

The present invention has been conceived in view of the above circumstances.

It is an object of the present invention to provide a liquid-contained vibration isolating apparatus having an attaching plate which a open pore is easily formed in and which can be produced at lower costs.

It is another object of the present invention to provide a method of producing an attaching plate which a open pore is easily formed in and which can be produced at lower production costs, for use in a liquid-contained vibration isolating apparatus.

A liquid-contained vibration isolating apparatus according to the present invention, which attains the above object, comprises a first attaching plate to be attached to one mating member; a second attaching plate formed in the shape of a cylinder having an opening at one end and a bottom at the other end, and having, at the bottom, a plane attaching seat portion which is to be plane contacted with an attaching surface of the other mating member; a rubber molding provided between the first attaching plate and the opening of the second attaching plate and forming a tightly-closed action chamber together with the second attaching plate; a diaphragm fixed liquid-tightly to an inner circumference of the second attaching plate and dividing the action chamber into a liquid chamber in which liquid is contained and an air chamber; and a partition member fixed liquid-tightly to the inner circumference of the second attaching plate and dividing the liquid chamber into a main liquid chamber on the side of the rubber molding and an sub liquid chamber on the side of the diaphragm: and characteristically the second attaching plate has a groove which is formed on an outer surface of the attaching seat portion and at least one end of which is open at the outermost periphery, and a open pore which is provided in the groove and connects the air chamber with the outside.

A method of producing an attaching plate for use in a liquid-contained vibration isolating apparatus according to the present invention is a production method of an attaching plate comprising a tubular portion, a flange portion formed at one end of the tubular portion, and a plane attaching seat portion which closes the other end of the tubular portion, and characteristically comprises the steps of forming the flange portion, the tubular portion, and the attaching seat open poreion by drawing an approximately circular metal plate; forming a groove on an outer surface of the attaching seat portion, at least one end of the groove being open at the outermost periphery; and forming a open pore which connects the inside with the outside, in the groove of the attaching seat portion.

Advantages of the apparatus and method of the present invention are as follows.

In the liquid-contained vibration isolating apparatus of the present invention, the second attaching plate has a groove which is formed on the outer surface of the attaching seat portion and at least one end of which is open at the outermost periphery, and a open pore which is provided in the groove and connects the air chamber with the outside. Therefore, the open pore can be formed with ease in producing the second attaching plate. Accordingly, its production costs can be decreased.

In the present inventive method, since a open pore formed in a groove of the attaching plate is formed in a manner to penetrate the plane attaching seat portion approximately at right angles, there is no need to use complicate or special cam dies, and the open pore can be formed with ease.

### BRIEF DESCRIPTION OF THE DRAWINGS

The exact nature of this invention, as well as other objects and advantages thereof, will be readily apparent from consideration of the following specification relating to the annexed drawings in which:
Figure 1 is a cross-sectional view of a liquid-contained vibration isolating apparatus of a preferred embodiment of the present invention;
Figure 2 is a bottom end view of a second attaching plate of the liquid-contained vibration isolating apparatus of the preferred embodiment of the present invention;
Figure 3 is a cross-sectional view taken along line III-III of Figure 2;
Figure 4 is a cross-sectional view taken along line IV-IV of Figure 2;
Figures 5(a) and 5(b) are a plan view and a side cross-sectional view showing strip layouts in the steps of producing a second attaching plate of the liquid-contained vibration isolating apparatus of the preferred embodiment of the present invention; and
Figure 6 is a cross-sectional view of a conventional liquid-contained vibration isolating apparatus.

### DETAILED DESCRIPTION OF THE PREFERRED EMBODIMENTS

Now, a preferred embodiment of the present invention will be described with reference to the drawings.

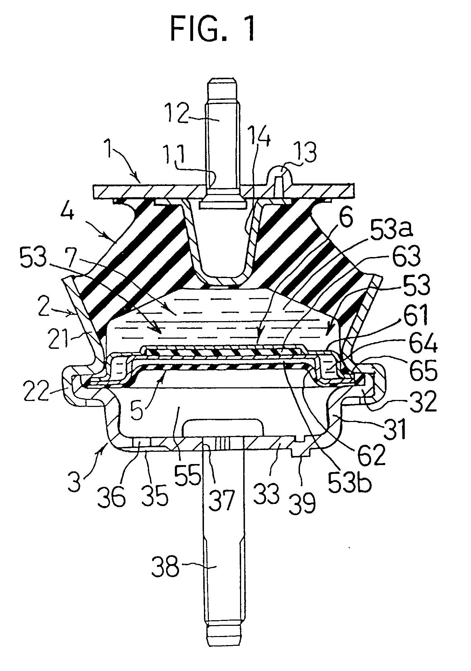

The liquid vibration isolating apparatus of this preferred embodiment is used by being mounted on an engine. As shown in Figure 1, the liquid vibration isolating apparatus mainly comprises a first attaching plate 1 to be attached to an engine side; an intermediate cylindrical member 2 having a caulking portion 22 at one end thereof; a second attaching plate 3 having the shape of a cylinder with one end open and the other end closed and having the opened end fixed to the caulking portion 22 by caulking; a rubber molding 4 existing integrally between the first attaching plate 1 and the other end of the intermediate cylindrical member 2 and forming a tightly-closed action chamber together with the second attaching plate 3; a diaphragm 5 fixed liquid-tightly to the caulking portion 22 by caulking at a periphery thereof together with the opened end of the second attaching plate 3 and dividing the action chamber into a liquid chamber 53 and an air chamber 55; and a partition member 6 fixed liquid-tightly to the caulking portion 22 by caulking at a periphery thereof together with the diaphragm 5 and dividing the liquid chamber 53 into a main liquid chamber 53a and an sub liquid chamber 53b.

The first attaching plate 1 is formed of metal in a disk shape. This first attaching plate 1 has a through hole 11 in the center thereof, and an attaching bolt 12 for attaching the first attaching plate 1 to an engine bracket is fitted into the through hole 11. In the neighborhood of the attaching bolt 12 of the first attaching plate 1, a locating projection 13 is formed in a manner to project upward. A metal cap 14 is fixed on a lower surface of the first attaching plate 1 in a manner to cover the head of the attaching bolt 12, and a rubber molding 3 is formed by vulcanisation on the outer circumferential surface of the cap 14.

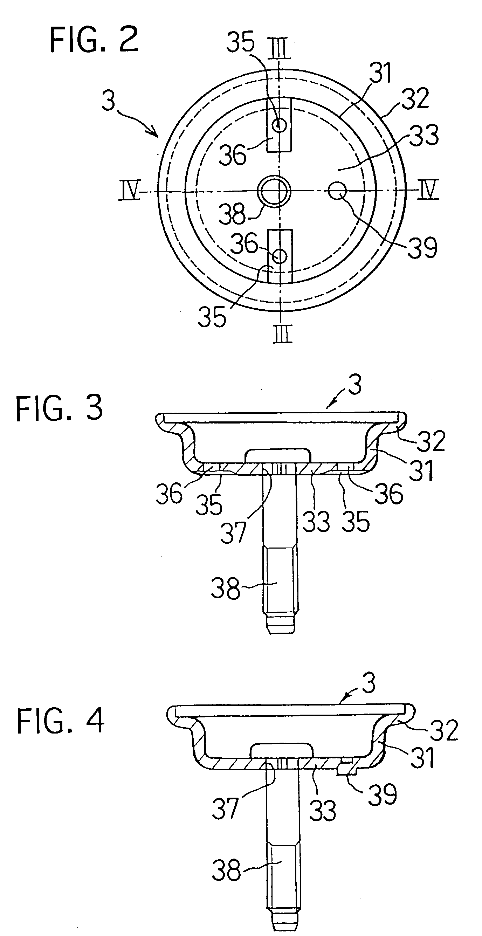

The intermediate cylindrical member 2 comprises a cylindrical main body 21 whose diameter is decreased in the direction from the upper end to the lower end in Figure 2, and a caulking portion 22 formed at the lower end of the main body 21. The caulking portion 22 protrudes in an outward radial direction in the cross-sectional shape of a hollow rectangle without one side.

As shown in Figures 2 to 4, the second attaching plate 3 has the shape of a cylinder with a bottom, and comprises a tubular portion 31, a flange portion 32 formed at one end of the tubular portion 31 and having the cross-sectional shape of L, and a plane attaching seat portion 33 which closes the other end of the tubular portion 31. The second attaching plate 3 is assembled by fixing its flange portion 32 to the caulking portion 22 of the intermediate cylindrical member 2 by caulking.

A pair of grooves 35 are provided in axially symmetrical positions on the outer surface of the attaching seat portion 33, and extend in radial directions, and one end of each of the grooves 35 is open at the outermost periphery. In addition, a open pore 36 which connects the inside and the outside of the second attaching plate 3 is provided in each of the grooves 35. A through hole 37 is formed approximately in the center of the attaching seat portion 33, and an attaching bolt 38 for attaching the second attaching plate 3 to a car body side is fitted into the through hole 37. In addition, on the outer surface of the attaching seat portion 33, a locating projection 39 is provided in the neighborhood of the attaching bolt 38.

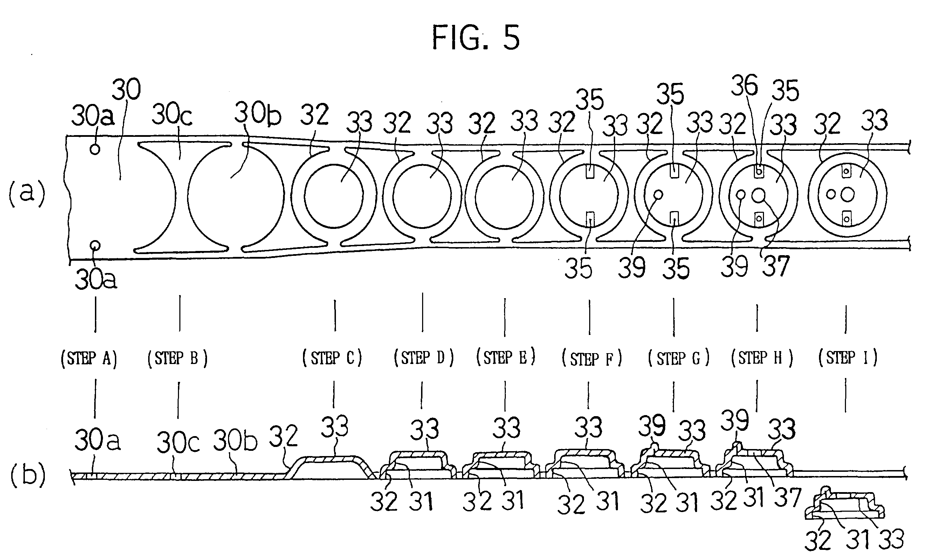

This second attaching plate 3 is produced as follows. First, sheet metal undergoes transfer pressing, thereby obtaining an intermediate product in the shape of a cylinder with a bottom. Specifically, as the strip layouts are shown in Figures 5(a) and 5(b), pilot holes 30a are formed by piercing a metal strip 30 in predetermined positions (in Step A). Then, hourglass blanks 30c are punched out in positions before and after a circular portion 30b, in order to produce the circular portion 30b (in Step B). Next, the circular portion 30b is subjected to first drawing (in Step C), second drawing (in Step D), and forming (in Step E), thereby producing a cylinder with a bottom comprising a tubular portion 31, a flange portion 32, and an attaching seat portion 33.

Then, channels are press-formed in axially symmetrical positions on the outer surface of the attaching seat portion 33, thereby obtaining a pair of grooves which extend in radial directions and one end of each of which is open at the outermost periphery (in Step F). Next, a dowel is formed in a predetermined position on the attaching seat portion 33, thereby obtaining a locating projection 39 (in Step G).

Then, the circular portion 30b is pierced in a predetermined position in each of the grooves 35 of the attaching seat portion 33, in a manner to penetrate the attaching seat portion 33 and connect the inside and the outside, thereby forming a open pore 36 in each of the grooves 35. At the same time, a through hole 37 which the attaching bolt 38 is fitted into is formed by piercing approximately in the center of the attaching seat portion 33 (in Step H). In this case, the open pores 36 and the through hole 37 are formed in such a way to penetrate the plane attaching seat portion 33 approximately at right angles. Then, the cylinder with the bottom comprising the tubular portion 31, the flange portion 32 and the attaching seat portion 33 is separated from the metal strip 30 (in Step I), thereby obtaining an intermediate product.

Subsequently, the intermediate product is subjected to cutting and plating, and the attaching bolt 38 is fitted into the through hole 37 of the attaching seat portion 33. Thus, production of the second attaching plate 3 shown in Figures 2 to 4 is completed.

The rubber molding 4 approximately has the shape of a cylinder, and integrally exists between the first attaching plate 1 and the other end of the intermediate cylindrical member 2. An upper end of the rubber molding 4 is attached by vulcanization to the lower surface of the first attaching plate 1 and the outer circumferential surface of the cap 14. A lower end of the rubber molding 4 is attached by vulcanisation to the inner circumferential surface of the main body 21 of the intermediate cylindrical member 2. Thus, a tightly-closed action chamber is formed between the rubber molding 4 and the second attaching plate 3.

The diaphragm 5 is formed of an elastically deformable rubber thin film in the shape of a hat, and liquid-tightly fixed by caulking to the caulking portion 22 of the intermediate cylindrical member 2 with its periphery contacted with the inner circumferential surface of the flange portion 32 of the second attaching plate 3. Therefore, the action chamber formed by the rubber molding 4 and the second attaching plate 3 is divided into the liquid chamber 53 on the side of the rubber molding 4 and the air chamber 55 on the side of the second attaching plate 3. The liquid chamber 53 contains incompressible Liquid 7 such as water, alkylene glycol, polyalkylene glycol, and silicone oil.

The partition member 6 comprises a first member 61 formed of a metal plate in the shape of a hat; a second member 62 formed of a metal plate in the shape of a hat, placed on the inside of the first member 61, and forming an arched orifice passage 64 together with the first member 61; and a sealing rubber disk 63 provided between the first member 61 and the second member 62. The overlapping flange portions 65 of the first member 61 and the second member 62 together with the periphery of the diaphragm 5 are liquid-tightly fixed by caulking to the caulking portion 22 of the intermediate cylindrical member 2. Thus, the liquid chamber 53 is divided into the main liquid chamber 53a on the side of the rubber molding 4 and the sub liquid chamber 53b on the side of the diaphragm 5.

The liquid vibration isolating apparatus of this preferred embodiment thus constructed is used by fixing the first attaching plate 1 to, for example, an engine bracket by way of the attaching bolt 11, and fixing the second attaching plate 3 to a car body side by way of the attaching bolt 38. In this case, even when the attaching seat portion 33 of the second attaching plate 3 is plane contacted with an plane attaching surface of the car body, the open pores 36 in the attaching seat portion 33 are not closed because the open pores 36 are provided in the grooves 35. Therefore, the air chamber 55 securely communicates with the outside through the open pores 36 and the grooves 35.

Vibration in a high frequency range from an engine is effectively absorbed by elastic deformation of the rubber molding 4. Such vibration in a low frequency range as engine shakes is effectively absorbed by resonance of the liquid 7 which flows through the orifice passage 64 in accordance with changes in the volume of the main liquid chamber 53a and the sub liquid chamber 53b. The inner pressure of the sub liquid chamber 53b is absorbed by elastic deformation of the diaphragm 5, and there arises a difference in pressure between the inner pressure of the sub liquid chamber 53b and that of the main liquid chamber 53a. Therefore, the liquid 7 is smoothly flown in the orifice passage 64. The expansion and contraction of the diaphragm 5 at this time is smoothly carried out by way of the open pores 36 and the grooves 35 which connect the air chamber 55 and the outside. Since the open pores 36 are provided in the attaching seat portion 33, there is little possibility that the diaphragm in expansion is contacted with edges of the open pores, and as a result, the durability becomes excellent.

As mentioned above, the second attaching plate 3 of the liquid vibration isolating apparatus of this preferred embodiment has grooves which are formed on the outer surface of the attaching seat portion 33 and one end of each of which is open at the outermost periphery, and the open pores 36 which connect the air chamber 55 with the outside are respectively formed in the grooves 35. Hence, the open pores 36 can be easily formed and the production costs can be decreased.

Specifically speaking, in the method of producing the second attaching plate 3 of this preferred embodiment, the open pores 36 provided in the grooves 35 of the attaching seat portion 33 are formed in a manner to penetrate the plane attaching seat portion 33 approximately at right angles. Therefore, there is no need to employ complicate or special cam dies in a transfer press step, and the open pores 36 can be formed with ease. In addition, since burrs hardly generate in forming the open pores 36, the step of deburring can be omitted or simplified. Thus, the production costs can be decreased.

It is only necessary that the grooves 35 provided in the attaching seat portion 33 of the second attaching plate 3 are formed on the outer surface of the attaching seat portion 33 in a manner that at least one end of each of the grooves 35 is open at the outermost periphery. Hence, the size and number of the grooves 35 can be appropriately selected in accordance with the open pores 36.

Portions constituting the grooves 35 of the attaching seat portion 33 are made thin by the grooves 35 in the above preferred embodiment. However, for example, in the case where the tubular portion 31 is long and the volume of the air chamber 55 is sufficiently large, the portions constituting the grooves 35 can have the same thickness as other portions and have a stepped shape.

In construction, the liquid vibration isolating apparatus of this preferred embodiment includes the intermediate cylindrical member 2 having the caulking portion 22 at one end, and the flange portion 32 of the second attaching plate 3 and the peripheries of the diaphragm 5 and the partition member 6 are fixed by caulking to the caulking portion 22. The present invention, however, is not limited to the liquid vibration isolating apparatus having this construction. For example, the present invention can be applied to a liquid vibration isolating apparatus having a construction in which a tubular portion extending in an axial direction is provided at an opened end of the flange portion of the second attaching plate, and an intermediate cylindrical member is inserted into that tubular portion. In this case, various attaching structures can be employed such as a structure in which a diaphragm and a partition member are pinched between an end portion of the intermediate cylindrical member, and the flange portion of the second attaching plate.

Obviously, many modifications and variations of the present invention are possible in the light of the above teachings. It is therefore to be understood that within the scope of the appended claims, the invention may be practiced otherwise than as specifically described.

A liquid-contained vibration isolating apparatus having an attaching plate which a open pore can be easily formed in and can be produced at low costs. The liquid-contained vibration isolating apparatus comprises a first attaching plate; an intermediate cylindrical member having a caulking portion at one end; a second attaching plate shaped in a cylinder with a bottom, fixed by caulking to the caulking portion at one end thereof, and having, at the bottom, a plane attaching seat portion which is to be plane contacted with an attaching surface of the other mating member; a rubber molding provided integrally between the first attaching plate and the other end of the intermediate cylindrical member and forming a tightly-closed action chamber together with the second attaching plate; a diaphragm whose periphery is fixed by caulking to the caulking portion and which divides the action chamber into a liquid chamber and an air chamber; and a partition member whose periphery is fixed by caulking to the caulking portion and which divides the liquid chamber into a main liquid chamber and an sub liquid chamber. The second attaching plate is characteristically has a groove which is formed on the outer surface of the attaching seat portion and one end of which is open at the outermost periphery, and a open pore which is provided in the groove and connects the air chamber with the outside.

## Claims

1. A liquid-contained vibration isolating apparatus comprising:
a first attaching plate to be attached to one mating member;
a second attaching plate formed in the shape of a cylinder having an opening at one end and a bottom at the other end, and having, at said bottom, a plane attaching seat portion which is to be plane contacted with an attaching surface of the other mating member;
a rubber molding provided between said first attaching plate and said opening of said second attaching plate and forming a tightly-closed action chamber together with said second attaching plate;
a diaphragm fixed liquid-tightly to an inner circumference of said second attaching plate and dividing said action chamber into a liquid chamber in which liquid is contained, and an air chamber; and
a partition member fixed liquid-tightly to said inner circumference of said second attaching plate and dividing said liquid chamber into a main liquid chamber on the side of said rubber molding and an sub liquid chamber on the side of said diaphragm,
said second attaching plate having a groove which is formed on an outer surface of said attaching seat portion and at least one end of which is open at the outermost periphery, and a open pore which is provided in said groove and connects said air chamber with the outside.

2. A liquid-contained vibration isolating apparatus according to claim 1, wherein said groove is provided in axially symmetrical portion on an outer surface of said attaching seat portion.

3. A liquid-contained vibration isolating apparatus according to claim 1 or 2, wherein said groove extends in radial direction on an outer surface of said attaching seat portion.

4. A liquid-contained vibration isolating apparatus according to claims 1 to 3, wherein said open pore is formed in such a way to penetrate said attaching seat portion approximately at right angle.

5. A method of producing an attaching plate to be used in a liquid-contained vibration isolating apparatus and comprising a tubular portion, a flange portion formed at one end of said tubular portion, and a plane attaching seat portion which closes the other end of said tubular portion, comprising the steps of:
drawing an approximately circular metal plate to form said flange portion, said tubular portion, and said attaching seat portion;
forming a groove on an outer surface of said attaching seat portion, at least one end of said groove being open at the outermost periphery; and
forming a open pore which connects the inside with the outside, in said groove of said attaching seat portion.

6. A method of producing an attaching plate to be used in a liquid-contained vibration isolating appararus according to claim 5, wherein said flange portion, said tubular portion and said attaching seat portion are continuously formed by subjecting sheet metal to transfer pressing.

7. A method of producing an attaching plate to be used in a liquid-contained vibration isolating apparatus according to claim 5, wherein said groove is formed by subjecting press-forming to axially symmetrical position on an outer surface of said attaching seat portion.

8. A method of producing an attaching plate to be used in a liquid-contained vibration isolating apparatus according to claim 5, wherein said open pore is formed in such a way to penetrate said attaching seat portion approximately at right angle.
